(19) Europäisches Patentamt
European Patent Office
Office européen des brevets

(11) **EP 2 271 928 B1**

(12) **FASCICULE DE BREVET EUROPEEN**

(45) Date de publication et mention
de la délivrance du brevet:
**26.07.2017 Bulletin 2017/30**

(21) Numéro de dépôt: **09734018.6**

(22) Date de dépôt: **14.04.2009**

(51) Int Cl.:
**G01N 29/44** *(2006.01)*

(86) Numéro de dépôt international:
**PCT/EP2009/054379**

(87) Numéro de publication internationale:
**WO 2009/130140 (29.10.2009 Gazette 2009/44)**

(54) **PROCÉDÉ ET DISPOSITIF DE CONTRÔLE NON-DESTRUCTIF PAR ULTRASONS DE LA POROSITÉ D'UNE PIÈCE EN MATÉRIAU COMPOSITE**

VERFAHREN UND VORRICHTUNG FÜR NICHT DESTRUKTIVE ULTRASCHALLPRÜFUNG DER POROSITÄT EINES TEILS AUS VERBUNDSTOFF

METHOD AND DEVICE FOR THE ULTRASONIC NON-DESTRUCTIVE CHECKING OF THE POROSITY OF A PART MADE OF A COMPOSITE MATERIAL

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **22.04.2008 FR 0852690**

(43) Date de publication de la demande:
**12.01.2011 Bulletin 2011/02**

(73) Titulaire: **Airbus Group SAS
31700 Blagnac (FR)**

(72) Inventeur: **DOMINGUEZ, Nicolas
F-31830 Plaisance du Touch (FR)**

(74) Mandataire: **Ipside
6, Impasse Michel Labrousse
31100 Toulouse (FR)**

(56) Documents cités:
**US-A1- 2003 101 007     US-A1- 2004 054 474
US-A1- 2007 006 651**

• **RAMASWAMY S ET AL: "Non-invasive measurement of membrane morphology via UFDR: pore-size characterization" JOURNAL OF MEMBRANE SCIENCE, ELSEVIER SCIENTIFIC PUBL.COMPANY. AMSTERDAM, NL, vol. 239, no. 1, 1 août 2004 (2004-08-01), pages 143-154, XP004516967 ISSN: 0376-7388**

**Description**

La présente invention appartient au domaine du contrôle non-destructif par ultrasons de pièces en matériau composite, en particulier au contrôle de la porosité du matériau composite des pièces en phase de production.

Les procédés de contrôle non-destructif par ultrasons sont utilisés dans de nombreux domaines industriels, notamment pour le contrôle des pièces en matériau composite comportant des fibres maintenues dans une matrice. Ces contrôles sont particulièrement importants lorsque l'intégrité des pièces en service doit être garantie, notamment dans le cas de constructions aéronautiques.

Un dispositif de contrôle non-destructif par ultrasons comporte en général des équipements pour l'inspection par ultrasons et des équipements pour l'analyse des données collectées lors de l'inspection.

Les équipements pour l'inspection consistent en au moins un transducteur ultrasonore, qui réalise une conversion d'un signal, en général électrique, en une onde ultrasonore et vice-versa, et en un générateur/récepteur de signaux électriques qui est connecté au transducteur ultrasonore.

Les équipements pour l'analyse consistent en des moyens de visualisation des données collectées et des moyens de calcul pour le traitement des données collectées, comme par exemple l'isolation d'échos d'ondes ultrasonores, la détermination de niveaux de puissance, etc.

Dans le cas d'une pièce aéronautique en matériau composite, l'évaluation quantitative du niveau de porosité du matériau composite formant ladite pièce est une étape particulièrement importante du contrôle de qualité en phase de production de ladite pièce.

La porosité correspond à la présence de bulles dans la matrice du matériau composite, qui ont des dimensions petites (10 μm à 250 μm) par rapport aux longueurs d'ondes des ondes ultrasonores généralement utilisées (en général de 300 μm à 3mm).

La porosité de la matrice du matériau composite réduit la résistance mécanique maximale de la pièce, et il convient d'évaluer le niveau de porosité correspondant afin de déterminer si la résistance mécanique de ladite pièce est suffisante pour l'application qui en sera faite.

Pour évaluer ce niveau de porosité, il est courant de mesurer l'atténuation d'une onde ultrasonore traversant la pièce.

Toutefois, l'interprétation de la valeur d'atténuation mesurée, c'est-à-dire la traduction en termes de niveau de porosité de ladite valeur d'atténuation, s'avère complexe. La complexité d'interprétation réside dans le fait que la valeur d'atténuation dépend de nombreux paramètres, qui dépendent notamment du transducteur ultrasonore utilisé, du type de matériau composite formant la pièce, de l'épaisseur de ladite pièce, etc.

Il est connu de la demande de brevet US 2007/0089479, de réaliser un échantillon dans un matériau de référence homogène (c'est-à-dire n'étant pas en matériau composite) présentant des inclusions maîtrisées représentatives des bulles présentes dans la matrice du matériau composite de la pièce, et d'effectuer une mesure d'atténuation ultrasonore sur cet échantillon et d'en comparer le résultat avec le résultat de l'inspection de la pièce en matériau composite dont on cherche à déterminer le taux de porosité.

Cette solution présente des limitations du fait de la non-prise en compte des phénomènes physiques qui sont la source de l'atténuation dans les matériaux composites (présence de fibres et viscoélasticité de la résine), phénomènes qui dépendent de la fréquence ultrasonore. Ceci résulte en une limitation de la gamme de fréquences pour laquelle l'approximation d'un matériau composite par un matériau de référence homogène est valable. L'utilisation d'un autre transducteur dont la gamme fréquentielle ne coïnciderait pas avec celle ayant fait l'objet des validations induit donc des erreurs dans l'évaluation du niveau de porosité. De la demande US2004/0054474, il est aussi connu d'estimer les propriétés mécaniques d'une pièce en matériau composite, propriétés mécaniques qui varient dans le temps, comportant les étapes de: a) mesure avec un transducteur d'un signal correspondant à des ondes ultrasonores après propagation dans l'échantillon, b) comparaison du signal mesuré à l'étape a) avec un signal calculé suivant un modèle analytique qui tient compte d'une part d'une fonction de transfert du transducteur et de l'électronique de réception, et d'autre part de propriétés acoustiques préalablement estimées de la pièce, c'est-à-dire des valeurs d'atténuation de référence, c) mise à jour des propriétés acoustiques de la pièce en fonction des différences entre le signal mesuré et le signal calculé. La présente invention propose de résoudre les problèmes susmentionnés en établissant un ensemble de résultats de référence correspondant à plusieurs échantillons de référence représentatifs de différents niveaux de porosité du matériau composite considéré. Ces résultats de référence sont obtenus par calcul à partir d'un ensemble restreint de données expérimentales et rendent possible l'évaluation d'un niveau de porosité pour toute épaisseur de matériau et quel que soit le transducteur ultrasonore utilisé.

Dans un procédé non-destructif d'évaluation d'un niveau de porosité d'une pièce en matériau composite au moyen d'au moins un transducteur ultrasonore selon la revendication 1, le niveau de porosité de la pièce est estimé par une comparaison d'une valeur d'atténuation par ladite pièce d'une onde ultrasonore émise par l'au moins un transducteur ultrasonore avec des valeurs d'atténuation de référence d'une onde ultrasonore dudit au moins un transducteur ultrasonore par des échantillons de référence $R_n^m$ d'épaisseur $e_m$ et représentatif de niveaux de porosité $P_n$ connus différents du matériau composite dans lequel la pièce est fabriquée. Le procédé selon l'invention est caractérisé en ce que les valeurs d'atténuation de référence sont calculées sur la base :

- d'une fonction d'onde, préalablement mémorisée, représentative d'une onde ultrasonore émise par l'au moins un transducteur ultrasonore,
- et du résultat d'un calcul de filtrage de la fonction d'onde par des fonctions de transfert $F_n^m$ préalablement mémorisée, représentatives d'atténuations fréquentielles subies par des ondes ultrasonores traversant les échantillons de référence $R_n^m$.

La fonction d'onde est déterminée dans une étape préalable sans la pièce et sans l'échantillon de référence $R_n^m$, en mesurant une onde ultrasonore émise par l'au moins un transducteur ultrasonore dans un milieu de couplage, dans des conditions voisines de celles devant être mises en oeuvre pour la pièce.

Avantageusement pour améliorer la précision du niveau de porosité estimé, ledit niveau de porosité de la pièce est estimé en comparant la valeur d'atténuation par la pièce avec des valeurs d'atténuation de référence calculées pour au moins N échantillons de référence $R_n^m$, N étant supérieur ou égal à deux, de niveaux de porosité $P_n$ connus différents, $1 \leq n \leq N$, chaque échantillon de référence étant caractérisé par une fonction de transfert $F_n^m$ propre.

Dans un mode préféré de mise en oeuvre, les fonctions de transfert $F_n^m$ sont établies après détermination d'une épaisseur de la pièce, et l'épaisseur $e_m$ de chaque échantillon de référence $R_n^m$ est proche de l'épaisseur de la pièce.

Dans un autre mode préféré de mise en oeuvre, des valeurs d'atténuation de référence sont calculées préalablement à la détermination de l'épaisseur de la pièce pour M échantillons de référence $R_n^m$, par niveau de porosité, d'épaisseurs différentes $e_m$ ($1 \leq m \leq M$), M étant supérieur ou égal à deux. Dans ce cas des valeurs d'atténuation de référence pour une épaisseur sensiblement voisine d'une épaisseur de ladite pièce sont calculées par interpolation ou extrapolation des valeurs d'atténuation de référence par les échantillons de référence $R_n^m$ d'épaisseurs $e_m$, $1 \leq m \leq M$.

Dans les deux modes de mise en oeuvre précédents, le niveau de porosité pour la pièce est estimé en comparant la valeur d'atténuation par ladite pièce aux valeurs d'atténuation de référence calculées pour les épaisseurs voisines de ladite pièce ; le niveau de porosité estimé est par exemple égal au niveau de porosité pour lequel la valeur d'atténuation de référence la plus proche de la valeur d'atténuation par la pièce a été calculée, éventuellement la plus proche par valeurs supérieures.

Le procédé comporte également dans un mode particulier de mise en oeuvre une étape dans laquelle la fonction de transfert $F_n^m$ d'un échantillon de référence $R_n^m$ de niveau de porosité $P_n$ et d'épaisseur $e_m$ est déterminée dans le domaine des fréquences en calculant pour des valeurs de fréquences f discrètes l'expression :

$$F_n^m(f) = \exp\left(\frac{e_m}{ad_n}\right) \cdot \frac{|S_n(f)|}{A|S(f)|},$$

expression dans laquelle $S_n(f)$ est une mesure d'un spectre fréquentiel d'une onde ultrasonore ayant traversé un échantillon de référence réel $R_n$ d'épaisseur $d_n$, réalisé en matériau composite de même type que celui de la pièce et de niveau de porosité $P_n$, S(f) est une mesure d'un spectre fréquentiel d'une onde ultrasonore de mêmes caractéristiques n'ayant pas traversé ledit échantillon de référence réel $R_n$, a et A sont des facteurs positifs qui dépendent du mode de mesure desdits spectres fréquentiels S(f) et $S_n(f)$.

Avantageusement pour réduire la quantité de données qui doivent être mémorisées, la fonction de transfert $F_n^m$ de l'échantillon de référence $R_n^m$ de niveau de porosité $P_n$ et d'épaisseur $e_m$ est déterminée suivant l'expression :

$$F_n^m(f) = \exp\left(-\frac{\alpha_n(f) \cdot e_m}{20}\right),$$

où $\alpha_n(f)$ est une fonction d'atténuation de référence préalablement établie qui est déterminée suivant l'expression :

$$\alpha_n(f) = \frac{1}{ad_n} \cdot 20 \cdot \log\left(\frac{A|S(f)|}{|S_n(f)|}\right).$$

Pour augmenter le nombre de niveaux de porosité connus utilisés pour déterminer le niveau de porosité de la pièce, des valeurs d'atténuation de référence pour des niveau de porosité intermédiaires sont dans un mode voisin de mise en oeuvre calculées par interpolation ou extrapolation des valeurs d'atténuation de référence obtenues pour les échantillons de référence $R_n^m$ de niveaux de porosité $P_n$.

La description suivante de modes de réalisation de l'invention est faite en se référant aux figures, dans lesquelles des références identiques désignent des éléments identiques ou analogues, qui représentent de manière non limitative :

- Figure 1 : une représentation schématique d'un dispositif de contrôle non-destructif par ultrasons selon l'invention,
- Figure 2 : une représentation schématique des étapes d'un procédé d'évaluation de niveau de porosité selon l'invention,
- Figure 3 : une représentation schématique d'un mode de détermination d'une fonction d'onde d'un transducteur ultrasonore,
- Figures 4a et 4b : un exemple d'une fonction d'onde dans les domaines temporel et fréquentiel,
- Figures 5a et 5b : une représentation schématique d'un mode de caractérisation d'un échantillon de référence réel,
- Figures 6a et 6b : des exemples de fonctions d'atténuation de référence et de fonctions de transfert selon l'invention,
- Figures 7a et 7b : un exemple de filtrage d'une fonction d'onde par une fonction de transfert dans les domaines fréquentiel et temporel,
- Figures 8a et 8b : des exemples de modes de représentation de valeurs d'atténuation de référence selon l'invention.

La présente invention concerne un procédé d'évaluation 6 d'un niveau de porosité d'une pièce 2 en matériau composite comportant des fibres maintenues dans une matrice, par un contrôle non-destructif par ultrasons de la dite pièce. L'invention concerne également un dispositif 1 pour le contrôle non-destructif du niveau de porosité de la pièce en matériau composite 2.

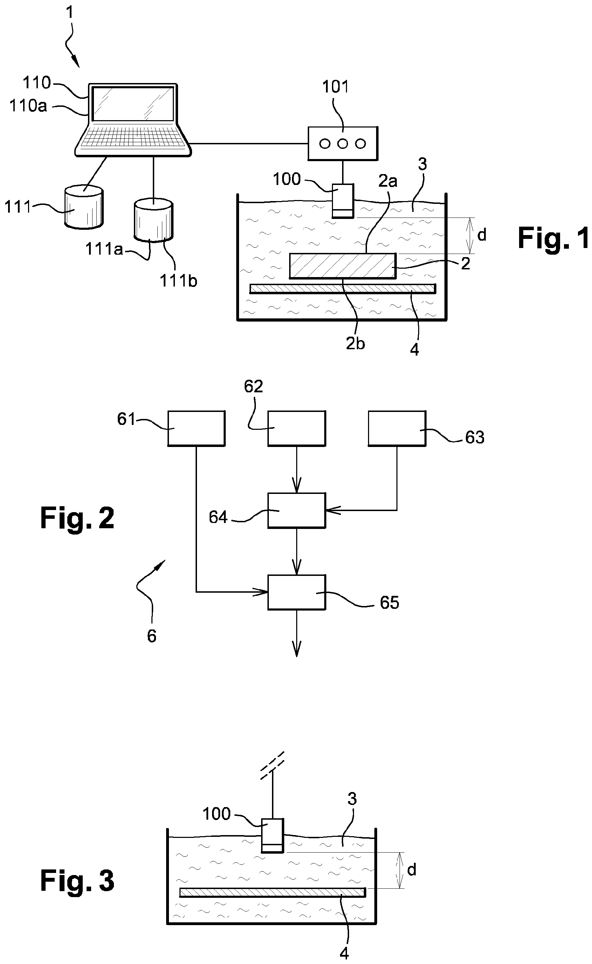

Tel que représenté sur la figure 1, le dispositif 1 utilisé pour le contrôle non-destructif par ultrasons de la pièce en matériau composite 2 comporte des équipements pour l'inspection ultrasonore, notamment un transducteur ultrasonore 100 et un générateur/récepteur 101 de signaux, généralement électriques, et des équipements pour l'analyse des données collectées au cours de l'inspection, tels que des moyens de calcul 110 (un microcontrôleur, un ordinateur disposant d'un microprocesseur, etc.) et des moyens de stockage 111 (une mémoire électronique ou magnétique, etc.) pour mémoriser les résultats de l'inspection ultrasonore.

La pièce en matériau composite 2 est, de manière connue, au moins partiellement immergée dans un milieu de couplage 3.

Le transducteur 100 est en général placé, pour l'évaluation de la porosité, de sorte à émettre des ondes ultrasonores qui ont une incidence sensiblement normale à une face avant 2a de la pièce en matériau composite, en regard dudit transducteur.

Le transducteur 100 de la figure 1 est utilisé en émission et en réception, et mesure des échos dus à des discontinuités d'impédances acoustiques.

Un écho, dit « de face », est reçu pour une interface entre la face avant 2a de la pièce 2 et le milieu de couplage 3, et un écho, dit « de fond », est en général reçu pour une interface entre ledit milieu de couplage et une face arrière 2b de ladite pièce, située du côté de la pièce opposé au transducteur 100.

Dans l'exemple représenté sur la figure 1, un écho peut également être reçu pour une interface entre le milieu de couplage 3 et une plaque réfléchissante 4, par exemple en verre, qui est placée en vis-à-vis de la face arrière 2b de la pièce 2. L'inspection est alors dite par « double transmission » du fait que les ondes ultrasonores traversent deux fois la pièce 2.

Il est également possible d'effectuer une inspection dite par « transmission », en utilisant un transducteur pour l'émission du côté de la face avant 2a, et un transducteur pour la réception du côté de la face arrière 2b.

Pour évaluer le niveau de porosité de la pièce 2, l'atténuation par ladite pièce d'une onde ultrasonore émise par le transducteur 100 est mesurée.

Par niveau de porosité, il faut comprendre une valeur représentative de caractéristiques structurelles ou mécaniques de la pièce induites par la présence de bulles dans la matrice du matériau composite. Le niveau de porosité est par exemple évalué sous la forme d'un pourcentage volumique de « vide » (c'est à dire de bulles) ou d'un niveau d'abattement de la résistance mécanique de la pièce.

Dans la suite de l'exposé, les notations suivantes sont utilisées pour les représentations dans les domaines fréquentiel et temporel de fonctions : une fonction notée H peut correspondre à l'une ou l'autre des représentations, H(f) est la représentation fréquentielle de la fonction H, et H(t) est la représentation temporelle de ladite fonction H.

Le procédé d'évaluation 6 comporte une pluralité d'étapes 61, 62, 63, 64 et 65 qui sont représentées schématiquement sur la figure 2. Il est à noter qu'en pratique les étapes 62, 63, et éventuellement 64 sont de préférence mises en oeuvre avant l'étape 61. L'étape 65 est exécutée en dernier.

Les résultats de certaines étapes sont reproductibles et, si lesdits résultats sont mémorisés pour être réutilisés, lesdites étapes ne sont pas nécessairement exécutées à nouveau.

Dans l'étape 61 du procédé d'évaluation 6, l'inspection par le transducteur 100 de la pièce 2 en matériau composite est réalisée et au moins une valeur d'atténuation par ladite pièce d'une onde ultrasonore émise par le transducteur 100 est calculée.

Les pertes aux interfaces, par exemple entre le milieu de couplage 3 d'une part et les faces avant 2a et arrière 2b d'autre part, sont également mesurées ou calculées, ou compensées par calibration.

Dans l'étape 62 du procédé d'évaluation 6, le transducteur 100, utilisé dans l'étape 61 est caractérisé.

La caractérisation du transducteur 100 consiste en la détermination d'une fonction d'onde $F_O$, représentative des ondes ultrasonores émises par ledit transducteur, avec les mêmes réglages que ceux utilisés pour faire le contrôle de l'étape 61, et reçues en l'absence de pièce en matériau composite.

La fonction d'onde $F_O$ est par exemple déterminée en plaçant une plaque réfléchissante 4 en face du transducteur 100 dans le milieu de couplage 3, tel que représenté sur la figure 3, et en mesurant l'écho d'une onde ultrasonore réfléchie par la plaque réfléchissante 4.

De préférence, la plaque réfléchissante 4 est placée à une distance d du transducteur 100, sensiblement égale à la distance entre ledit transducteur et la face avant 2a de la pièce 2 dans l'étape 61, notamment dans le cas d'un transducteur ultrasonore focalisé.

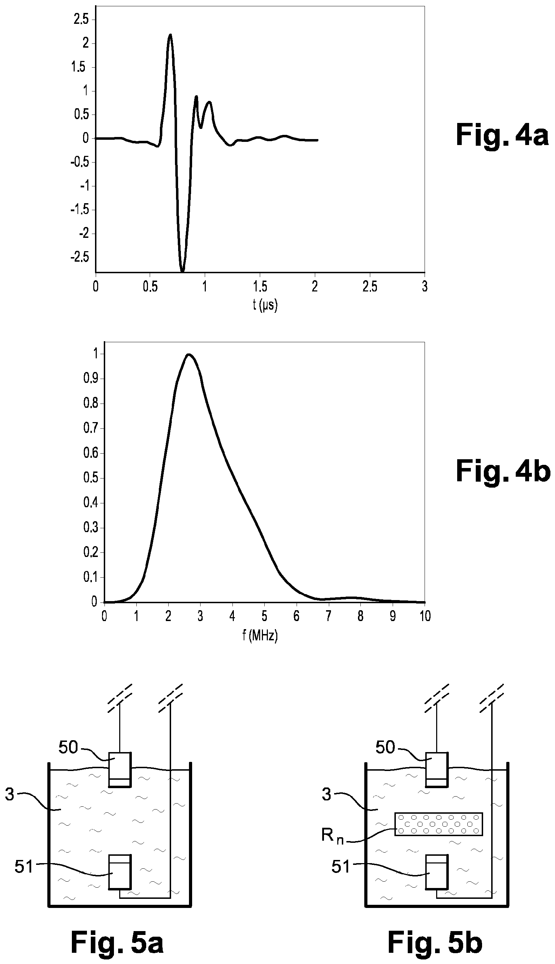

Un exemple d'écho mesuré est représenté sur la figure 4a. Un tel écho est une représentation temporelle $F_O(t)$ de la fonction d'onde $F_O$ associée au transducteur 100.

La fonction d'onde $F_O(t)$ est de préférence transposée dans le domaine des fréquences, par exemple par transformée de Fourier, afin d'avoir une fonction d'onde $F_O(f)$ sous la forme d'un spectre fréquentiel. Le spectre fréquentiel associé à l'écho représenté sur la figure 4a est représenté sur la figure 4b.

Les fréquences f considérées pour la fonction d'onde $F_O(f)$ sont de préférence des valeurs discrètes comprises dans un intervalle $[f_{MIN}, f_{MAX}]$. L'intervalle $[f_{MIN}, f_{MAX}]$ est choisi de sorte que l'essentiel de la puissance des ondes ultrasonores émises par chaque transducteur ultrasonore pouvant être utilisé est compris dans ledit intervalle. Sur l'exemple de la figure 4b, $f_{MIN} = 0Hz$ et $F_{MAX} = 10MHz$.

La fonction d'onde $F_O$ associée au transducteur 100 dépend uniquement du transducteur 100 et ne dépend pas de la pièce en matériau composite 2 à contrôler.

La fonction d'onde associée au transducteur 100 est donc mémorisée pour être réutilisée pour évaluer le niveau de porosité pour d'autres pièces que la pièce 2 au moyen du même transducteur 100. Dans ce cas, si la fonction d'onde $F_O$ a été préalablement établie et mémorisée, l'étape 62 n'est pas nécessairement exécutée sauf par exemple de façon sensiblement périodique pour tenir compte de l'évolution dans le temps des caractéristiques du transducteur 100.

Dans le cas où l'inspection de l'étape 61 est effectuée par transmission, il est préférable de déterminer la fonction d'onde associée à la paire de transducteurs utilisés, dans une configuration comparable à celle représentée sur la figure 5a.

Dans l'étape 63 du procédé d'évaluation 6, au moins une fonction de transfert $F_n^m$ est déterminée, représentative d'un échantillon de référence $R_n^m$ d'épaisseur $e_m$ et représentatif d'un niveau de porosité $P_n$ du matériau composite de la pièce 2.

De préférence des fonctions de transfert $F_n^m$ sont déterminées pour un nombre N, de préférence supérieur ou égal à 3, de niveaux de porosité $P_n$, $1 \le n \le$ N, différents, choisis dans un intervalle d'intérêt des niveaux de porosité, par exemple compris entre un niveau de porosité représentatif d'un matériau composite sain, et un niveau de porosité représentatif d'un matériau composite de résistance mécanique insuffisante.

Dans l'étape 63, les fonctions de transfert $F_n^m$ sont déterminées à partir d'échantillons de référence, dits réels, $R_n$, $1 \le n \le N$, dont les épaisseurs $d_n$ peuvent être différentes de l'épaisseur $e_m$.

Chaque échantillon de référence réel $R_n$, est effectivement fabriqué dans un matériau composite de même type que celui dans lequel la pièce 2 est fabriquée, et est représentatif du niveau de porosité $P_n$ qui est connu.

Dans la suite de l'exposé, on considère que plus n est grand, $1 \le n \le N$, plus le niveau de porosité $P_n$ est élevé : $P_1 < P_2 < ... < P_N$.

L'au moins une fonction de transfert $F_n^m$ pour le niveau de porosité $P_n$, $1 \le n \le N$, est déterminée en émettant des ondes ultrasonores en direction de l'échantillon de référence réel $R_n$, avec un transducteur ultrasonore (ou deux transducteurs dans le cas d'une inspection par transmission) qui n'est pas nécessairement le transducteur 100 utilisé dans l'étape 61.

L'au moins une fonction de transfert $F_n^m$ pour le niveau de porosité $P_n$, $1 \le n \le N$, est par exemple déterminée à partir d'un spectre fréquentiel $S(f)$ d'une onde ultrasonore n'ayant pas traversé l'échantillon de référence réel $R_n$ et d'un spectre fréquentiel $S_n(f)$ d'une onde ultrasonore ayant traversé ledit échantillon de référence réel, qui sont mesurés de préférence sur l'intervalle $[f_{MIN}, f_{MAX}]$ décrit précédemment.

Dans le cas d'une mesure des spectres fréquentiels par transmission, tel que représenté sur les figures 5a et 5b, utilisant un transducteur en émission 50 et un transducteur en réception 51, le spectre fréquentiel $S(f)$ est mesuré sans l'échantillon de référence réel $R_n$ (figure 5a) et le spectre fréquentiel $S_n(f)$ est mesuré en intercalant ledit échantillon de référence entre les transducteurs 50 et 51 (figure 5b).

Dans un mode préféré de mise en oeuvre, une fonction intermédiaire $\alpha_n(f)$, dite fonction d'atténuation de référence, est déterminée en calculant, pour chaque fréquence f considérée dans l'intervalle $[f_{MIN}, f_{MAX}]$, l'expression suivante :

$$\alpha_n(f) = \frac{1}{d_n} \cdot 20 \cdot \log\left(\left(\frac{T \cdot |S(f)|}{|S_n(f)|}\right)\right).$$

Expression dans laquelle T est un coefficient de transmission, prenant en compte les pertes aux interfaces correspondant à une face avant et une face arrière de l'échantillon de référence réel $R_n$.

Le coefficient T, dont la valeur est soit calculée soit mesurée, est égal à l'expression suivante :

$$T = \frac{4Z_{MC} \cdot Z_{CO}}{(Z_{MC} + Z_{CO})^2}$$

où $Z_{MC}$ est l'impédance acoustique du milieu de couplage et $Z_{CO}$ est l'impédance acoustique du matériau composite.

Dans le cas d'une inspection par double transmission, la fonction d'atténuation de référence $\alpha_n(f)$ est calculée suivant l'expression :

$$\alpha_n(f) = \frac{1}{2 \cdot d_n} \cdot 20 \cdot \log\left(\left(\frac{T^2 \cdot |S(f)|}{|S_n(f)|}\right)\right).$$

En effet, du fait de la double transmission à travers l'échantillon de référence $R_n$, le coefficient de transmission $T$ et l'épaisseur $d_n$ dudit échantillon de référence doivent être pris en compte deux fois.

La fonction d'atténuation de référence $\alpha_n(f)$ est également calculable suivant d'autres méthodes, par exemple en comparant un spectre fréquentiel de l'écho de face et un spectre fréquentiel de l'écho de fond, et il est entendu que le calcul de ladite fonction d'atténuation n'est pas limité aux méthodes décrites. De manière plus générale, la fonction d'atténuation de référence $\alpha_n(f)$ est calculée suivant l'expression :

$$\alpha_n(f) = \frac{1}{a \cdot d_n} \cdot 20 \cdot \log\left(\frac{A \cdot |S(f)|}{|S_n(f)|}\right)$$

où a et A sont des facteurs réels qui dépendent du mode d'inspection mis en oeuvre pour mesurer les spectres fréquentiels $S(f)$ et $S_n(f)$ (a = 1 et A = T pour une inspection par transmission, a = 2 et A = $T^2$ pour une inspection par double transmission).

La fonction d'atténuation de référence $\alpha_n(f)$ est avantageuse du fait qu'elle est indépendante de l'épaisseur $d_n$ de l'échantillon de référence réel $R_n$ et permet de calculer, pour le niveau de porosité $P_n$ considéré, des fonctions de transfert $F_n^m$ d'échantillons de référence $R_n^m$ pour des épaisseurs $e_m$ différentes, notamment de $d_n$.

La fonction de transfert $F_n^m(f)$ pour le niveau de porosité $P_n$ et pour l'épaisseur $e_m$ est déterminée en calculant pour chaque fréquence considérée :

$$F_n^m(f) = \exp\left(-\frac{\alpha_n(f) \cdot e_m}{20}\right).$$

La fonction de transfert $F_n^m(f)$ est également calculable directement à partir des spectres fréquentiels $S(f)$ et $S_n(f)$, et le calcul ou non desdites fonctions d'atténuation de référence dépend du mode de mise en oeuvre choisi. La fonction de transfert $F_n^m(f)$ est par exemple déterminée directement suivant l'expression générale suivante :

$$F_n^m(f) = \exp\left(\frac{e_m}{ad_n}\right) \cdot \frac{|S_n(f)|}{A|S(f)|}.$$

Si l'épaisseur de la pièce 2 est connue avant de déterminer les fonctions de transfert $F_n^m$, lesdites fonctions de transfert sont déterminées pour une épaisseur $e_m$ proche de l'épaisseur de la pièce 2. Le cas échéant, les fonctions de transfert $F_n^m$ sont établies pour un nombre M d'épaisseurs différentes $e_m$, $1 \le m \le M$.

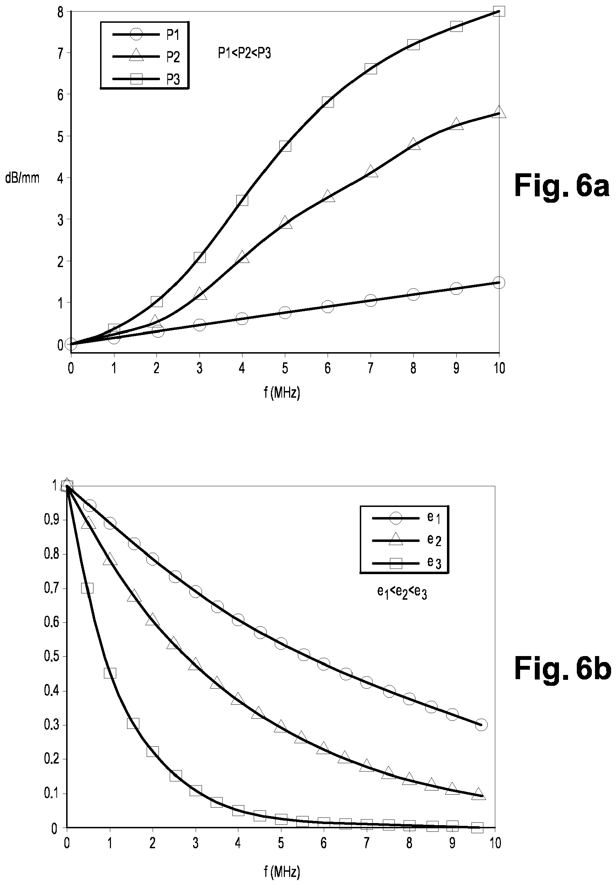

Des fonctions d'atténuation de référence obtenues pour N = 3 niveaux de porosité $P_1$ à $P_3$ sont représentées sur la figure 6a. Des fonctions de transfert obtenues pour M = 3 valeurs d'épaisseurs $e_1$ à $e_3$ sont représentées sur la figure 6b pour un niveau de porosité $P_n$.

Du fait de l'utilisation d'échantillons de référence réels $R_n$ fabriqués dans un matériau composite de même type que celui de la pièce 2, la dépendance fréquentielle de l'atténuation du matériau composite est prise en compte. De plus, les fonctions de transfert sont calculées pour plusieurs épaisseurs différentes à partir d'un nombre restreint d'échantillons de référence réels $R_n$.

Il est à noter que les fonctions d'atténuation de référence et/ou les fonctions de transfert ne dépendent pas du ou des transducteurs ultrasonores utilisés dans l'étape 61 mais seulement des caractéristiques des échantillons de référence réels $R_n$. Les fonctions d'atténuation de référence et/ou les fonctions de transfert sont mémorisées pour être réutilisées pour évaluer la porosité de pièces en matériau composite du même type, indépendamment du transducteur utilisé.

Il est également important de noter que les fonctions d'atténuation de référence et/ou les fonctions de transfert telles que vues précédemment caractérisent l'atténuation intrinsèque du matériau composite considéré et sont donc indépendantes des pertes aux interfaces. La compensation des pertes aux interfaces est généralement effectuée lors de l'étape 61 par calibration ; dans le cas contraire cette compensation est par exemple effectuée de manière connue par post-traitement de la mesure de l'étape 61.

Dans l'étape 64 du procédé d'évaluation 6 selon l'invention, des valeurs d'atténuation de référence d'ondes ultrasonores du transducteur 100 par les échantillons de référence $R_n^m$ sont calculées, en utilisant la fonction d'onde $F_O$ caractéristique du transducteur 100 et les fonctions de transfert $F_n^m$ ($1 \le m \le M$, $1 \le n \le N$) caractéristiques des échantillons de référence.

Pour simuler l'atténuation d'ondes ultrasonores du transducteur 100 par l'échantillon de référence $R_n^m$ d'épaisseur $e_m$ et de niveau de porosité $P_n$, la fonction d'onde $F_O$ associée au transducteur 100 est filtrée par la fonction de transfert $F_n^m$.

Le filtrage est calculé, de manière connue, dans le domaine temporel ou le domaine fréquentiel. Dans le cas d'un filtrage calculé dans le domaine fréquentiel, le produit de la fonction de transfert par la fonction d'onde $F_n^m(f) \cdot F_O(f)$ est calculé pour chaque fréquence f considérée dans l'intervalle [$f_{MIN}$, $f_{MAX}$].

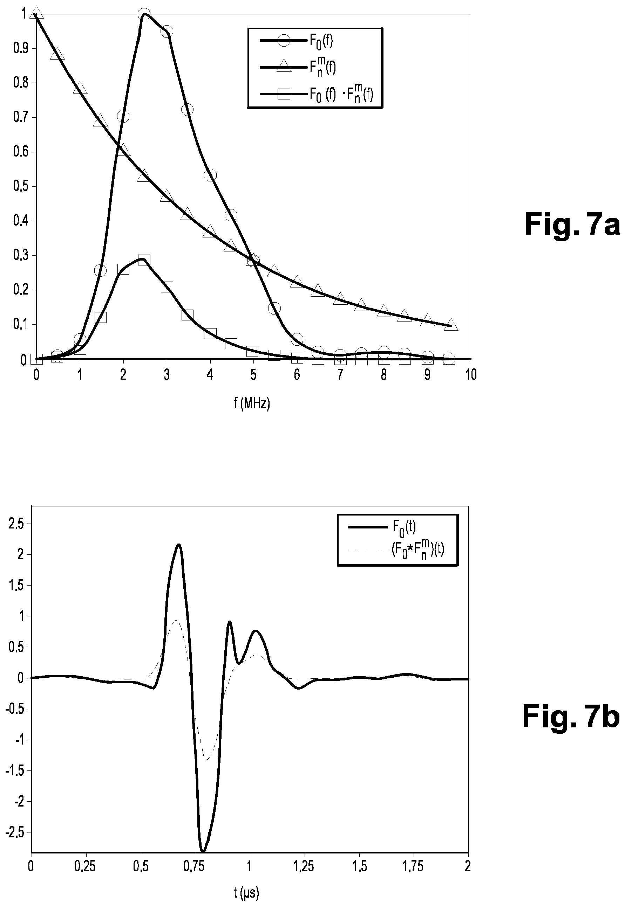

Un exemple illustrant le calcul du filtrage dans le domaine fréquentiel est représenté sur la figure 7a. Le résultat du calcul du filtrage est également représenté dans le domaine temporel sur la figure 7b, sous la référence $(F_O * F_n^m)(t)$.

Une valeur d'atténuation de référence est calculée pour chaque échantillon de référence $R_n^m$ ($1 \le m \le M$, $1 \le n \le N$), par exemple en calculant le rapport des puissances de la fonction d'onde $F_O$ avant et après filtrage, lesdites puissances étant calculées par intégration des spectres fréquentiels $F_O(f)$ et $F_n^m(f) \cdot F_O(f)$. La valeur d'atténuation de référence est dans un autre mode de calcul estimée dans le domaine temporel en calculant un rapport des valeurs des extrema de la fonction d'onde $F_O(t)$ avant et après filtrage.

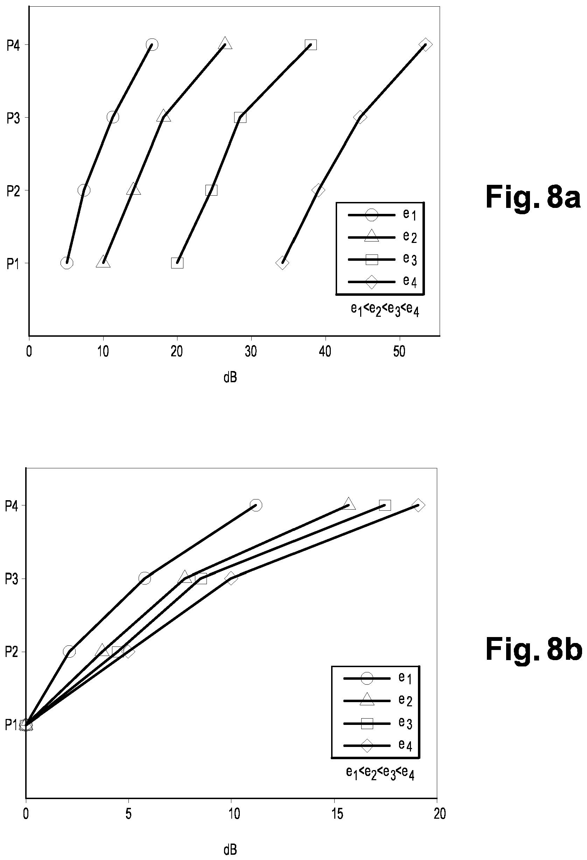

Les valeurs d'atténuation de référence sont soit des atténuations absolues, soit des atténuations de référence relatives, c'est-à-dire définies par rapport à un échantillon de référence représentatif d'un matériau composite sain. La figure 8a et la figure 8b sont des représentations de valeurs d'atténuation de référence correspondant à des atténuations absolues d'une part et à des atténuations relatives d'autre part.

Dans un mode particulier de mise en oeuvre, des valeurs d'atténuation de référence sont calculées pour des niveaux de porosité intermédiaires, par interpolation ou extrapolation des valeurs d'atténuation de référence des échantillons de référence $R_n^m$. En particulier il a été vérifié qu'une interpolation linéaire est conservative en ce que le niveau d'abattement mécanique pour un niveau de porosité interpolé linéairement est toujours supérieur au niveau d'abattement mécanique réel du matériau correspondant.

Dans le cas où l'épaisseur de la pièce 2 n'était pas connue dans l'étape 63, des fonctions de transfert $F_n^m$ ont de préférence été calculées pour un ensemble

d'épaisseurs $e_m$, $1 \le m \le M$. Des valeurs d'atténuation de référence sont avantageusement déterminées pour l'épaisseur de ladite pièce, par interpolation ou extrapolation des valeurs d'atténuation de référence calculées pour les échantillons de référence $R_n^m$ d'épaisseurs $e_m$, $1 \le m \le M$.

L'épaisseur effective de la pièce est par exemple déterminée en mesurant un retard de l'écho de fond par rapport à l'écho de face. La vitesse de phase de l'onde ultrasonore dans la pièce 2 en matériau composite et le retard mesuré permettent d'estimer l'épaisseur de ladite pièce. Si la vitesse de phase n'est pas connue, elle est par exemple estimée en fonction des atténuations des échos mesurés par rapport à un échantillon de référence représentatif d'un matériau composite sain, en utilisant des relations connues, comme les relations de Kramers-Krönig.

Les valeurs d'atténuation de référence ainsi calculées et les paramètres correspondants, c'est-à-dire les niveaux de porosité et épaisseurs correspondants, forment un ensemble de données de référence dont les formats de représentation sont variables et non limités aux formats décrits.

Dans l'étape 65 du procédé d'évaluation 6, le niveau de porosité de la pièce en matériau composite 2 est estimé en comparant la valeur d'atténuation obtenue avec le transducteur 100 sur ladite pièce, mesurée à l'étape 61, avec les valeurs d'atténuation de référence établies à l'étape 64.

Le niveau de porosité de la pièce 2 est estimé par comparaison de la valeur d'atténuation par la pièce 2 et des valeurs d'atténuation de référence établies pour les épaisseurs voisines de l'épaisseur de ladite pièce. Par exemple, le niveau de porosité estimé est égal au niveau de porosité pour lequel la valeur d'atténuation de référence la plus proche de la valeur d'atténuation par la pièce 2 a été établie, éventuellement la plus proche par valeurs supérieures.

L'invention concerne également le dispositif 1 de contrôle non-destructif du niveau de porosité de la pièce 2 en matériau composite, adapté pour mettre en oeuvre le procédé selon l'invention.

Le dispositif 1 comporte les éléments d'un système de contrôle non-destructif par ultrasons connu, notamment des moyens de calcul 110 et des moyens de stockage 111 dans lesquels sont mémorisés les résultats de l'inspection ultrasonore de la pièce inspectée.

Le dispositif 1 comporte en outre des moyens de stockage 111a dans lesquels sont mémorisées des fonctions de transfert pour au moins le type de matériau composite formant ladite pièce, et avantageusement pour une pluralité de types de matériaux composites différents.

Le dispositif 1 comporte dans un mode particulier de réalisation des moyens de stockage 111 b dans lesquels sont mémorisées des fonctions d'ondes pour au moins le transducteur 100 mis en oeuvre, et avantageusement pour une pluralité de transducteurs ultrasonores différents.

Le dispositif 1 comporte des moyens de sélection pour sélectionner en fonction du type de matériau composite de la pièce 2 inspectée et du transducteur utilisé pour l'inspection ultrasonore de ladite pièce :

- les fonctions de transfert correspondant au matériau composite de la pièce inspectée, dans les moyens de stockage 111 a,
- la fonction d'onde correspondant au transducteur mis en oeuvre pour l'inspection, dans les moyens de stockage 111 b.

Le dispositif 1 comporte également des moyens de calcul 110a des valeurs d'atténuation de référence entre la fonction d'onde et les résultats de filtrages de ladite fonction d'onde par les fonctions de transfert.

Avantageusement, lesdits moyens de calcul 110a et les moyens de calcul 110 sont les mêmes.

Dans un mode particulier de réalisation, le dispositif comporte des moyens de détermination de l'épaisseur de ladite pièce, et les moyens de sélection sélectionnent dans les moyens de stockage 111a les fonctions de transfert correspondant à l'épaisseur de la pièce 2. Si lesdites fonctions de transfert ne se trouvent pas dans lesdits moyens de stockage, elles sont calculées par les moyens de calcul 110a en fonction des fonctions de transfert présentes dans lesdits moyens de stockage.

L'obtention des valeurs d'atténuation de référence est donc peu complexe et peu coûteuse car lesdites valeurs d'atténuation de référence sont calculées à partir d'un nombre restreint de données expérimentales qui sont réutilisables pour d'autres configurations de contrôle.

## Revendications

1. Procédé (6) non-destructif d'évaluation d'un niveau de porosité d'une pièce (2) en matériau composite au moyen d'au moins un transducteur ultrasonore (100), dans lequel dit procédé une valeur d'atténuation par ladite pièce d'une onde ultrasonore émise par l'au moins un transducteur ultrasonore (100) est déterminée, le niveau de porosité de ladite pièce étant estimé par une comparaison de la valeur d'atténuation par la pièce (2) avec des valeurs d'atténuation de référence d'une onde ultrasonore dudit au moins un transducteur ultrasonore par des échantillons de référence $R_n^m$ d'épaisseur $e_m$ et représentatifs de niveaux de porosité $P_n$ connus différents du matériau composite de ladite pièce, $1 \leq n \leq N$, N étant supérieur ou égal à deux, le procédé (6) étant **caractérisé en ce que** les valeurs d'atténuation de référence sont calculées sur la base :

- d'une fonction d'onde $F_o$, préalablement mémorisée, représentative d'une onde ultrasonore émise par l'au moins un transducteur ultrasonore (100),
- et du résultat de calculs de filtrages de ladite fonction d'onde par des fonctions de transfert $F_n^m$, préalablement mémorisées, représentatives d'atténuations fréquentielles subies par des ondes ultrasonores traversant les échantillons de référence $R_n^m$.

2. Procédé (6) selon la revendication 1, comportant une étape préalable dans laquelle la fonction d'onde $F_o$ est déterminée sans la pièce (2) et sans les échantillons de référence $R_n^m$, en mesurant une onde ultrasonore émise par l'au moins un transducteur ultrasonore (100) dans un milieu de couplage (3) dans des conditions voisines de celles devant être mises en oeuvre pour ladite pièce.

3. Procédé (6) selon l'une des revendications 1 à 2, dans lequel les fonctions de transfert $F_n^m$ sont établies après détermination d'une épaisseur de la pièce (2), et l'épaisseur $e_m$ de chaque échantillon de référence $R_n^m$ est proche de ladite épaisseur de la pièce.

4. Procédé (6) selon l'une des revendications 1 à 2, dans lequel des valeurs d'atténuation de référence sont calculées pour chaque niveau de porosité $P_n$, $1 \leq n \leq N$, pour M échantillons de référence $R_n^m$ d'épaisseurs différentes $e_m$, $1 \leq m \leq M$, M étant supérieur ou égal à deux, préalablement à la détermination d'une épaisseur de la pièce (2), et dans lequel dit procédé des valeurs d'atténuation de référence pour une épaisseur proche de l'épaisseur de ladite pièce sont calculées par interpolation ou extrapolation des valeurs d'atténuation de référence par les échantillons de référence $R_n^m$ d'épaisseurs $e_m$, $1 \leq m \leq M$.

5. Procédé (6) selon la revendication 3 ou 4, dans lequel le niveau de porosité pour la pièce (2) est estimé en comparant la valeur d'atténuation par ladite pièce aux valeurs d'atténuation de référence calculées pour une épaisseur proche de l'épaisseur de ladite pièce, et le niveau de porosité estimé est égal au niveau de porosité pour lequel une valeur d'atténuation de référence proche de la valeur d'atténuation par la pièce (2) a été calculée.

6. Procédé (6) selon l'une des revendications précédentes, comportant une étape dans laquelle la fonction de transfert $F_n^m$ d'un échantillon de référence $R_n^m$ de niveau de porosité $P_n$ et d'épaisseur $e_m$ est déterminée dans le domaine des fréquences en calculant pour des valeurs de fréquences $f$ discrètes l'expression :

$$F_n^m(f) = \exp\left(\frac{e_m}{ad_n}\right) \cdot \frac{|S_n(f)|}{A|S(f)|},$$

dans laquelle $S_n(f)$ est une mesure d'un spectre fréquentiel d'une onde ultrasonore ayant traversé un échantillon de référence réel $R_n$ d'épaisseur $d_n$, réalisé en matériau composite de même type que celui de la pièce (2) et de niveau de porosité $P_n$, $S(f)$ est une mesure d'un spectre fréquentiel d'une onde ultrasonore de mêmes caractéristiques n'ayant pas traversé ledit échantillon de référence réel $R_n$, a et A sont des facteurs positifs qui dépendent du mode de mesure desdits spectres fréquentiels $S(f)$ et $S_n(f)$.

7. Procédé (6) selon la revendication 6, dans lequel la fonction de transfert $F_n^m$ de l'échantillon de référence $R_n^m$ de niveau de porosité $P_n$ et d'épaisseur $e_m$ est déterminée suivant l'expression :

$$F_n^m(f) = \exp\left(-\frac{\alpha_n(f) \cdot e_m}{20}\right),$$

où $\alpha_n(f)$ est une fonction d'atténuation de référence préalablement établie qui est déterminée suivant l'expression :

$$\alpha_n(f) = \frac{1}{ad_n} \cdot 20 \cdot \log\left(\frac{A|S(f)|}{|S_n(f)|}\right).$$

8. Procédé (6) selon l'une des revendications précédentes, dans lequel le niveau de porosité de la pièce (2) est estimé par comparaison de la valeur d'atténuation par ladite pièce avec des valeurs d'atténuation de référence pour des niveaux de porosité intermédiaires, qui sont calculées par interpolation ou extrapolation des valeurs d'atténuation de référence obtenues pour les échantillons de référence $R_n^m$.

9. Dispositif (1) de contrôle non-destructif par ultrasons d'un niveau de porosité d'une pièce (2) en matériau composite au moyen d'au moins un transducteur ultrasonore (100), par comparaison d'une valeur d'atténuation par ladite pièce d'une onde ultrasonore émise par l'au moins un transducteur ultrasonore (100) avec des valeurs d'atténuation de référence d'ondes ultrasonores dudit au moins un transducteur ultrasonore par des échantillons de référence $R_n^m$ d'épaisseur $e_m$ et représentatifs de niveaux de porosité $P_n$ connus différents du matériau composite de la pièce (2), $1 \leq n \leq N$, N étant supérieur ou égal à deux, lequel dit dispositif comporte des moyens de calcul (110) de la valeur d'atténuation par la pièce (2), le dispositif (1) étant **caractérisé en ce qu'**il comporte :

- des moyens de stockage (111a) dans lesquels sont mémorisées des fonctions de transfert $F_n^m$ représentatives des atténuations fréquentielles introduites par les échantillons de référence $R_n^m$,
- des moyens de stockage (111 b) dans lesquels est mémorisée une fonction d'onde $F_o$ représentative des ondes ultrasonores émises par l'au moins un transducteur ultrasonore (100),
- des moyens de calcul (110a) des valeurs d'atténuation de référence sur la base de ladite au moins une fonction d'onde $F_o$ et du résultat de calculs de filtrages de ladite fonction d'onde par les fonctions de transfert.

10. Dispositif (1) selon la revendication 9, dans lequel des fonctions de transfert pour des échantillons de référence représentatifs d'une pluralité de types de matériaux composites différents sont mémorisées dans les moyens de stockage (111a), et lequel dit dispositif comporte des moyens de sélection pour sélectionner dans lesdits moyens de stockage les fonctions de transfert $F_n^m$ des échantillons de référence $R_n^m$ représentatifs du matériau composite de même type que celui de la pièce (2).

11. Dispositif (1) selon la revendication 10, comportant des moyens de détermination d'une épaisseur de la pièce (2), et dans lequel des fonctions de transfert sont mémorisées dans les moyens de stockage (111a) pour M échantillons de référence $R_n^m$ d'épaisseurs différentes $e_m$, $1 \leq m \leq M$, M étant supérieur ou égal à deux, et dans lequel les moyens de sélection sélectionnent les fonctions de transfert $F_n^m$ $F_n{}^m$ d'échantillons de référence d'épaisseur sensiblement voisine de l'épaisseur de ladite pièce pour estimer le niveau de porosité de ladite pièce.

**Patentansprüche**

1. Nicht-destruktives Verfahren (6) zur Prüfung eines Porositätsniveaus eines Teils (2) aus Verbundstoff mit Hilfe mindestens eines Ultraschallwandlers (100), wobei bei dem Verfahren ein Dämpfungswert durch das Teil einer von dem mindestens einen Ultraschallwandler (100) entsandten Ultraschallwelle bestimmt wird, wobei das Porositätsniveau des Teils durch einen Vergleich des Dämpfungswerts durch das Teil (2) mit Referenzdämpfungswerten einer Ultraschallwelle des mindestens einen Ultraschallwandlers durch Referenzproben $R_n^m$ mit einer Dicke $e_m$, die für verschiedene bekannte Porositätsniveaus $P_n$ des Verbundstoffes des Teils repräsentativ sind, geschätzt wird, wobei $1 \leq n \leq N$, wobei N größer oder gleich zwei ist, wobei das Verfahren (6) **dadurch gekennzeichnet ist, dass** die Referenzdämpfungswerte auf Basis

   - einer Funktion einer Welle $F_o$, die vorher gespeichert wurde und für eine von dem mindestens einen Ultraschallwandler (100) entsandte Ultraschallwelle repräsentativ ist,
   - und des Resultats von Berechnungen von Filterungen der Wellenfunktion durch Transferfunktionen $F_n^m$, die vorher gespeichert wurden und für frequentielle Dämpfungen repräsentativ sind, denen Ultraschallwellen unterliegen, die durch die Referenzproben $R_n^m$ hindurchgehen, berechnet werden.

2. Verfahren (6) nach Anspruch 1, umfassend einen vorherigen Schritt, bei dem die Wellenfunktion $F_o$ ohne das Teil (2) und ohne die Referenzproben $R_n^m$ bestimmt wird, wobei eine Ultraschallwelle gemessen wird, die von dem mindestens einen Ultraschallwandler (100) in einem Kupplungsbereich (3) unter ähnlichen Bedingungen wie jenen, die für das Teil eingesetzt werden müssen, entsandt wird.

3. Verfahren (6) nach einem der Ansprüche 1 bis 2, bei dem die Transferfunktionen $F_n^m$ nach Bestimmung einer Dicke des Teils (2) erstellt werden, und die Dicke $e_m$ jeder Referenzprobe $R_n^m$ nahe der Dicke des Teils ist.

4. Verfahren (6) nach einem der Ansprüche 1 bis 2, bei dem Referenzdämpfungswerte für jedes Porositätsniveau $P_n$, wobei $1 \leq n \leq N$, für M Referenzproben $R_n^m$ mit unterschiedlichen Dicken $e_m$, wobei $1 \leq m \leq M$, wobei M größer oder gleich zwei ist, vor der Bestimmung einer Dicke des Teils (2) berechnet werden, und bei welchem Verfahren Referenzdämpfungswerte für eine Dicke nahe der Dicke des Teils durch Interpolation oder Extrapolation der Referenzdämpfungswerte durch die Referenzproben $R_n^m$ mit Dicken $e_m$, wobei $1 \leq m \leq M$, berechnet werden.

5. Verfahren (6) nach Anspruch 3 oder 4, bei dem das Porositätsniveau für das Teil (2) geschätzt wird, indem der Dämpfungswert durch das Teil mit den Referenzdämpfungswerten verglichen wird, die für eine Dicke nahe der Dicke des Teils berechnet wurden, und das geschätzte Porositätsniveau gleich dem Porositätsniveau ist, bei dem ein Referenzdämpfungswert nahe dem Dämpfungswert durch das Teil (2) berechnet wurde.

6. Verfahren (6) nach einem der vorhergehenden Ansprüche, umfassend einen Schritt, bei dem die Transferfunktion $F_n^m$ einer Referenzprobe $R_n^m$ mit einem Porositätsniveau $P_n$ und einer Dicke $e_m$ in dem Frequenzbereich bestimmt wird, indem für diskrete Frequenzwerte f folgender Ausdruck berechnet wird:

$$F_n^m(f) = \exp\left(\frac{e_m}{ad_n}\right) \cdot \frac{|S_n(f)|}{A|S(f)|} \, ,$$

   wobei $S_n(f)$ ein Maß eines Frequenzspektrums einer Ultraschallwelle ist, die eine reale Referenzprobe $R_n$ mit einer Dicke $d_n$ durchlaufen hat, hergestellt aus einem Verbundstoff desselben Typs wie jener des Teils (2) und mit einem Porositätsniveau $P_n$, S(f) ein Maß eines Frequenzspektrums einer Ultraschallwelle mit denselben Merkmalen, die nicht die reale Referenzprobe $R_n$ durchlaufen hat, ist, a und A positive Faktoren sind, die vom Messmodus der Frequenzspektren S(f) und $S_n(f)$ abhängen.

7. Verfahren (6) nach Anspruch 6, bei dem die Transferfunktion $F_n^m$ der Referenzprobe $R_n^m$ mit einem Porositätsniveau $P_n$ und einer Dicke $e_m$ nach folgendem Ausdruck bestimmt wird:

$$F_n^m(f) = \exp\left(-\frac{\alpha_n(f) \cdot e_m}{20}\right) ,$$

   wobei $\alpha_n(f)$ eine vorher erstellte Referenzdämpfungsfunktion ist, die nach folgendem Ausdruck bestimmt wird:

$$\alpha_n(f) = \frac{1}{ad_n} \cdot 20 \cdot \log\left(\frac{A|S(f)|}{|S_n(f)|}\right).$$

8. Verfahren (6) nach einem der vorhergehenden Ansprüche, bei dem das Porositätsniveau des Teils (2) durch Vergleich des Dämpfungswerts durch das Teil mit Referenzdämpfungswerten für Zwischenporositätsniveaus geschätzt wird, die durch Interpolation oder Extrapolation der für die Referenzproben $R_n{}^m$ erhaltenen Referenzdämpfungswerte berechnet werden.

9. Vorrichtung (1) zur nicht-destruktiven Kontrolle durch Ultraschall eines Porositätsniveaus eines Teils (2) aus Verbundstoff mit Hilfe mindestens eines Ultraschallwandlers (100) durch Vergleich eines Dämpfungswerts durch das Teil einer von dem mindestens einen Ultraschallwandler (100) entsandten Ultraschallwelle mit Referenzdämpfungswerten von Ultraschallwellen des mindestens einen Ultraschallwandlers durch Referenzproben $R_n{}^m$ mit einer Dicke $e_m$, die für verschiedene bekannte Porositätsniveaus $P_n$ des Verbundstoffes des Teils (2) repräsentativ sind, wobei $1 \leq n \leq N$, wobei N größer oder gleich zwei ist, wobei die Vorrichtung Mittel (110) zur Berechnung des Dämpfungswerts durch das Teil (2) umfasst, wobei die Vorrichtung (1) **dadurch gekennzeichnet ist, dass** sie umfasst:

   - Speichermittel (111a), in denen Transferfunktionen $F_n{}^m$ gespeichert sind, die für frequentielle Dämpfungen, die durch die Referenzproben $R_n{}^m$ eingeführt werden, repräsentativ sind,
   - Speichermittel (111b), in denen eine Wellenfunktion $F_o$ gespeichert ist, die für Ultraschallwellen, die von dem mindestens einen Ultraschallwandler (100) entsandt werden, repräsentativ ist,
   - Mittel (110a) zur Berechnung der Referenzdämpfungswerte auf Basis der mindestens einen Wellenfunktion $F_o$ und des Resultats von Berechnungen von Filterungen der Wellenfunktion durch die Transferfunktionen.

10. Vorrichtung (1) nach Anspruch 9, bei der die Transferfunktionen für Referenzproben, die für eine Vielzahl von verschiedenen Verbundstofftypen repräsentativ sind, in den Speichermitteln (111a) gespeichert sind, wobei die Vorrichtung Auswahlmittel umfasst, um in den Speichermitteln die Transferfunktionen $F_n{}^m$ der Referenzproben $R_n{}^m$, die für den Verbundstoff eines selben Typs wie jenes des Teils (2) repräsentativ sind, auszuwählen.

11. Vorrichtung (1) nach Anspruch 10, umfassend Mittel zur Bestimmung einer Dicke des Teils (2), und bei der Transferfunktionen in den Speichermitteln (111a) für M Referenzproben $R_n{}^m$ mit unterschiedlichen Dicken $e_m$ gespeichert sind, wobei $1 \leq m \leq M$, wobei M größer oder gleich zwei ist, und bei der die Auswahlmittel die Transferfunktionen $F_n{}^m$ von Referenzproben mit einer Dicke im Wesentlichen ähnlich der Dicke des Teils auswählen, um das Porositätsniveau des Teils zu schätzen.

**Claims**

1. Non-destructive method (6) for checking a level of porosity of a part (2) made of composite material, using at least one ultrasonic transducer (100), in which said method a value of attenuation by said part of an ultrasonic wave emitted by the at least one ultrasonic transducer (100) is determined, the level of porosity of said part being estimated by comparing the value of attenuation by the part (2) with reference values of attenuation of an ultrasonic wave from said at least one ultrasonic transducer by reference specimens $R_n^m$ having a thickness $e_m$ and representing different known levels of porosity $P_n$ of the composite material of said part, where $1 \leq n \leq N$, N being greater than or equal to two, the method (6) being **characterized in that** the reference values of attenuation are calculated on the basis of:

   - a previously stored wave function $F_o$, representative of an ultrasonic wave emitted by the at least one ultrasonic transducer (100),
   - and the result of calculations of filterings of said wave function by previously stored transfer functions $F_n^m$, representative of frequency attenuations undergone by ultrasonic waves passing through the reference specimens $R_n^m$.

2. Method (6) according to Claim 1, comprising a preliminary step in which the wave function $F_o$ is determined without the part (2) and without the reference specimens $R_n^m$, by measuring an ultrasonic wave emitted by the at least one ultrasonic transducer (100) in a coupling medium (3) in conditions similar to those that are to be provided for said part.

3. Method (6) according to either of Claims 1 and 2, wherein the transfer functions $F_n^m$ are established after the determination of a thickness of the part (2), and the thickness $e_m$ of each reference specimen $R_n^m$ is similar to said thickness of the part.

4. Method (6) according to either of Claims 1 and 2, wherein reference values of attenuation are calculated for each level of porosity $P_n$, where $1 \leq n \leq N$, for M reference specimens $R_n^m$ having different thicknesses $e_m$, where $1 \leq m \leq M$, M being greater than or equal to two, before the determination of a thickness of the part (2), and in which said method reference values of attenuation for a thickness similar to the thickness of said part are calculated by interpolation or extrapolation of the reference values of attenuation by the reference specimens $R_n^m$ having a thickness $e_m$, where $1 \leq m \leq M$.

5. Method (6) according to Claim 3 or 4, wherein the level of porosity for the part (2) is estimated by comparing the value of attenuation by said part with the reference values of attenuation calculated for a thickness similar to the thickness of said part, and the estimated level of porosity is equal to the level of porosity for which a reference value of attenuation similar to the value of attenuation by the part (2) has been calculated.

6. Method (6) according to any of the preceding claims, comprising a step in which the transfer function $F_n^m$ of a reference specimen $R_n^m$ having a level of porosity $P_n$ and a thickness $e_m$ is determined in the frequency domain by calculating, for discrete frequency values f, the expression:

$$F_n^m(f) = \exp\left(\frac{e_m}{ad_n}\right) \cdot \frac{|S_n(f)|}{A|S(f)|},$$

in which $S_n(f)$ is a measurement of a frequency spectrum of an ultrasonic wave that has passed through a real reference specimen $R_n$ having a thickness $d_n$, made of composite material of the same type as that of the part (2) and having a level of porosity $P_n$; $S(f)$ is a measurement of a frequency spectrum of an ultrasonic wave having the same characteristics that has not passed through said real reference specimen $R_n$; and a and A are positive factors which depend on the mode of measurement of said frequency spectra $S(f)$ and $S_n(f)$.

7. Method (6) according to Claim 6, wherein the transfer function $F_n^m$ of the reference specimen $R_n^m$ having a level of porosity $P_n$ and a thickness $e_m$ is determined according to the expression:

$$F_n^m(f) = \exp\left(\frac{\alpha_n(f) \cdot e_m}{20}\right),$$

where $\alpha_n(f)$ is a previously established reference attenuation function which is determined according to the expression:

$$\alpha_n(f) = \frac{1}{ad_n} \cdot 20 \cdot \log\left(\frac{A|S(f)|}{|S_n(f)|}\right).$$

8. Method (6) according to any of the preceding claims, wherein the level of porosity of the part (2) is estimated by comparing the value of attenuation by said part with reference values of attenuation for intermediate levels of porosity, which are calculated by interpolation or extrapolation from the reference values of attenuation found for the reference specimens $R_n^m$.

9. Device (1) for the ultrasonic non-destructive testing of a level of porosity of a part (2) made of composite material, using at least one ultrasonic transducer (100), by comparing a value of attenuation by said part of an ultrasonic wave emitted by the at least one ultrasonic transducer (100) with reference values of attenuation of ultrasonic waves from said ultrasonic transducer by reference specimens $R_n^m$ having a thickness $e_m$ and representing different known levels of porosity $P_n$ of the composite material of the part (2), where $1 \leq n \leq N$, N being greater than or equal to two, which said device comprises means (110) for calculating the value of attenuation by the part (2), the device (1) being **characterized in that** it comprises:

- storage means (111a) in which are stored transfer functions $F_n^m$ representative of the frequency attenuations introduced by the reference specimens $R_n^m$,
- storage means (111b) in which is stored a wave function $F_O$ representative of the ultrasonic waves emitted by the at least one ultrasonic transducer (100),
- means (110a) for calculating the reference values of attenuation on the basis of said at least one wave function $F_O$ and of the result of calculations of filterings of said wave function by the transfer functions.

10. Device (1) according to Claim 9, wherein transfer functions for reference specimens representative of a plurality of different types of composite material are stored in the storage means (111a), which said device comprises selection means for selecting within said storage means the transfer functions $F_n^m$ of the reference specimens $R_n^m$ which are representative of the composite material of the same type as that of the part (2).

11. Device (1) according to Claim 10, comprising means for determining a thickness of the part (2), and wherein transfer functions are stored in the storage means (111a) for M reference specimens $R_n^m$ of different

thicknesses $e_m$, where $1 \leq m \leq M$, M being greater than or equal to two, and wherein the selection means select the transfer functions $F_n^m$ of reference specimens having a thickness substantially similar to the thickness of said part, in order to estimate the level of porosity of said part.

Fig. 1

Fig. 2

Fig. 3

**Fig. 4a**

**Fig. 4b**

**Fig. 5a**

**Fig. 5b**

Fig. 6a

Fig. 6b

Fig. 7a

Fig. 7b

**Fig. 8a**

**Fig. 8b**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070089479 A
- US 20040054474 A